# EUROPEAN PATENT SPECIFICATION

(11) **EP 2 796 406 B1**
(45) Date of publication and mention of the grant of the patent: **28.08.2019**
(21) Application number: 12860681.1
(22) Date of filing: 13.12.2012
(51) Int. Cl.: C01B 3/16, B01J 12/00

(54) **CO SHIFT CONVERSION DEVICE AND SHIFT CONVERSION METHOD**
CO-KATALYSATORKONVERTIERUNGSVORRICHTUNG UND KATALYSATORKONVERTIERUNGSVERFAHREN
DISPOSITIF DE CONVERSION CATALYTIQUE DE CO ET PROCÉDÉ DE CONVERSION CATALYTIQUE

(30) Priority: 22.12.2011 JP 2011282112
(43) Date of publication of application: 29.10.2014
(73) Proprietor: Renaissance Energy Research Corporation, Kyoto-shi Kyoto 612-8374 (JP)
(72) Inventor: OKADA, Osamu, Kyoto-shi Kyoto 601-8116 (JP); MORIMOTO, Kaori, Kyoto-shi Kyoto 601-8116 (JP); ITO, Chihiro, Kyoto-shi Kyoto 601-8116 (JP)
(74) Representative: Treeby, Philip David William
(86) International application number: PCT/JP2012/082323
(87) International publication number: WO 2013/094510

(56) References cited:
- EP-A1- 1 413 546
- EP-A1- 1 920 827
- JP-A- 2002 255 510
- JP-A- 2006 096 601
- JP-A- 2009 054 398
- JP-A- 2011 508 949
- US-A- 3 382 045
- CHEMICAL ABSTRACTS, CHEMICAL ABSTRACTS SERVICE (C A S), US, 3 April 1995 (1995-04-03), XP000662390, ISSN: 0009-2258

## Description

### TECHNICAL FIELD

The present invention relates to a device and a method for carbon monoxide (CO) shift conversion, in which carbon monoxide and water vapor contained in a reaction gas are reacted and thereby converted into carbon dioxide and hydrogen.

### BACKGROUND ART

As a hydrogen source for a fuel cell and the like, a reformed gas obtained by reforming hydrocarbon, alcohol, or the like is used. The reformed gas contains therein about 10% of carbon monoxide and carbon dioxide in addition to hydrogen. In the following, carbon monoxide will be referred to as CO and carbon dioxide will be referred to as CO₂.

In the case of a polymer electrolyte fuel cell which operates at a low temperature of 100°C or less, it is known that a platinum catalyst for use in an electrode is poisoned with CO contained in the reformed gas. When the platinum catalyst is poisoned, the reaction of hydrogen is inhibited, and the power generation efficiency of the fuel cell decreases considerably. To realize high power generation efficiency, it is required to suppress the concentration of CO in the reformed gas to 100 ppm or less, and preferably 10 ppm or less.

To lower the CO concentration in the reformed gas, it is necessary to remove CO to be contained. Usually, to remove CO contained in a mixed gas, shift conversion reaction is used. Specifically, in a shift converter in which a shift conversion catalyst is placed, a CO shift conversion reaction (water gas shift reaction) is generated in which CO and water vapor (H₂O) contained in a mixed gas (in this case, reformed gas) are reacted, and thereby converted to CO₂ and hydrogen (H₂). By the shift conversion reaction, the CO concentration in the reformed gas can be reduced to a range from several thousands ppm to about 1%.

Subsequently, in a selective oxidation device in which a platinum-based selective oxidation catalyst is placed, the mixed gas whose CO concentration is lowered is reacted with a trace amount of oxygen (may be air) (selective oxidation reaction). By the reaction, the concentration of CO contained in the mixed gas can be reduced to about 10 ppm or less at which an adverse effect is not exerted on the power generation efficiency of the fuel cell.

At the time of execution of the selective oxidation reaction, an oxidation reaction inevitably occurs not only with CO contained in the mixed gas but also hydrogen. When the concentration of CO in the mixed gas to be supplied to a selective oxidation device is high, the amount of oxygen necessary to oxidize CO increases, so that the amount of hydrogen to be oxidized also increases. As a result, the hydrogen generation amount decreases relative to a source gas amount, and the efficiency as a whole decreases. It is therefore understood that, to improve the hydrogen production efficiency, the concentration of CO in the mixed gas needs to be sufficiently reduced in a shift converter on the upstream side.

(Chemical Formula 1) CO + H₂O ⇔ H₂ + CO₂

The CO shift conversion reaction is an equilibrium reaction as represented by Chemical Formula 1, and the reaction to the right-hand side is an exothermic reaction. The sign "⇔" indicates that the reaction is in chemical equilibrium.

In the case where the reaction temperature is low, the composition is moved to the right-hand side (product side) of Formula. Therefore, from the viewpoint of lowering the concentration of CO in the mixed gas, the low reaction temperature is advantageous, but has another problem of a decrease in reaction rate.

When the conversion of CO (the reaction to the right-hand side as represented by Chemical Formula 1) progresses to a certain degree, the progress of the shift conversion reaction is inhibited due to restriction on chemical equilibrium. Therefore, to sufficiently lower the CO concentration, a large amount of shift conversion catalyst is required. However, a long time is needed for heating such a large amount of shift conversion catalyst. The above problems are disincentive to the reduction in shift converter size and the demand for saving start-up time, and are problematic, in particular, in a reforming system for a hydrogen station, a fuel cell system for household, and the like.

Methods for sufficiently lowering the concentration of CO in a mixed gas by the CO shift conversion reaction have been studied and developed so far.

Patent Document 1 discloses a configuration of performing the CO shift conversion reaction in two or more stages. The technique uses the fact that the CO shift conversion reaction is an exothermic reaction and, as described above, when the reaction temperature is low, the composition is moved to the right-hand side (product side) of Chemical Formula 1. Specifically, a reaction in the first stage is performed on the higher temperature side, and a reaction is performed in the low temperature range which is advantageous for equilibrium in the second stage.

As the shift conversion catalysts to be used, an iron-chromium-based catalyst or the like, which functions at 300°C or higher, is used in the shift converter on the high-temperature side, and a copper-zinc-based catalyst, a copper-chromium-based catalyst or the like, which functions at 150°C to 300°C, is used in the shift converter on the low-temperature side. The copper-based shift conversion catalyst, in particular, the copper-zinc-based catalyst is more advantageous than the catalyst for higher temperatures in that the shift conversion reaction is possible at a low temperature of 150°C to 300°C, and in terms of CO conversion rate, and advantageous in cost in that expensive materials such as noble metals are not used, and thus used widely in not only fuel cells but also hydrogen production processes.

The active species of the copper-based shift conversion catalyst is a reduced metal copper, which contains approximately 30 to 45% of copper oxide in the shipment of the catalyst, and therefore the catalyst is needed to be reduced with a reducing gas such as hydrogen for activation before use. In Patent Documents 2 and 3 below, it has been proposed that the reduction treatment is carried out in a short period of time with the use of a highly heat-resistance noble metal catalyst.

### Prior Art Documents

### Patent Documents

Patent Document 1: JP 2004-75474 A
Patent Document 2: JP 2000-178007 A
Patent Document 3: JP 2003-144925 A

### SUMMARY OF THE INVENTION

### PROBLEMS TO BE SOLVED BY THE INVENTION

As described above, while there are various compositions as the shift conversion catalyst, there has been a need to use a large amount of catalyst which is highly active at low temperatures that is advantageous in terms of CO conversion rate, in order to sufficiently lower the CO concentration to 1% or less. Conventionally, the inhibition of the reaction by restriction on chemical equilibrium with the progress of the CO shift conversion reaction has been considered as a main factor.

The present invention has been achieved in view of the problems with the shift conversion catalyst described above, and an object of the invention is to provide an apparatus and a method for CO shift conversion, which improves the conversion rate of CO without increasing usage of a shift conversion catalyst.

### MEANS FOR SOLVING THE PROBLEM

According to the present invention, there is provided a CO shift conversion device in which CO and H₂O contained in a gas to be processed are reacted and thereby converted into CO₂ and H₂, the device comprising: a CO shift conversion unit having a catalyst layer composed of a CO shift catalyst and performing a CO shift conversion process on a gas flowing inside; and a CO₂ removing unit removing CO₂ contained in a gas introduced and transmitting a processed gas whose CO₂ concentration is lower than that of the introduced gas to a downstream side, the CO₂ removing unit being formed of a membrane which selectively passes CO₂, wherein the catalyst layer is composed of a CO shift conversion catalyst having a property that a CO conversion rate decreases with an increase of the concentration of CO₂ contained in the gas flowing inside due to a CO₂ poisoning action and the CO shift conversion catalyst includes a copper-zinc-based catalyst, and the device is configured so that the gas to be processed is supplied to the CO shift conversion unit after the concentration of CO₂ contained in the gas to be processed is lowered by the CO₂ removing unit.

In addition, the CO shift conversion device according to the present invention has the CO shift conversion unit provided in a plurality of stages, and is configured so that
the gas to be processed is subjected to the CO shift conversion process in the CO shift conversion unit on an upstream side, and subsequently introduced to the CO₂ removing unit where the concentration of contained CO₂ is lowered, and subsequently supplied to the CO shift conversion unit on the downstream side.

According to a second aspect of the present invention, there is provided a CO shift conversion method in which CO and H₂O contained in a gas to be processed are reacted and thereby converted into CO₂ and H₂, the method comprising the steps of lowering a concentration of CO₂ contained in the gas to be processed by removing the CO₂ from the gas to be processed using a membrane which selectively passes CO₂; and subsequently performing a CO shift conversion process on the gas by allowing the gas to pass through a catalyst layer composed of a CO shift conversion catalyst, wherein the catalyst layer has a property that a CO conversion rate decreases with an increase of the concentration of CO₂ contained in the gas flowing inside due to a CO₂ poisoning action and the CO shift conversion catalyst composing the catalyst layer includes a copper-zinc-based catalyst.

In addition, the CO shift conversion method according to the present invention has the catalyst layer divided in a plurality of stages, wherein
the method comprises the steps of:
performing a CO shift conversion process on the gas to be processed by allowing the gas to pass through the catalyst layer on an upstream side side of two successive stages in the plurality of stages;
subsequently lowering the concentration of contained CO₂; and
subsequently performing a CO shift conversion process on the gas to be processed by allowing the gas to pass through the catalyst layer on the downstream side of the two successive stages.

### EFFECT OF THE INVENTION

By earnest studies, the inventors of the present invention have found that a CO shift conversion catalyst is poisoned by CO₂ contained in a mixed gas as a gas to be processed, which deteriorates the efficiency of the CO shift conversion reaction. On the basis of the study results, the inventors propose a method of preliminarily lowering the concentration of CO₂ contained by removing CO₂ contained in the gas to be processed and, after that, performing a CO shift conversion process using the CO shift conversion catalyst. According to the present invention, as compared with the conventional methods of performing the CO shift conversion process without lowering the CO₂ concentration, the influence of CO₂ poisoning on the CO shift conversion catalyst is suppressed and, as a result, the CO conversion rate can be largely improved.

In the CO shift conversion reaction, CO₂ is inevitably generated. Consequently, if contained CO₂ is removed to lower its concentration after the CO shift conversion process on a gas to be processed is performed once and then the CO shift conversion process is performed again, the concentration of the contained CO can be reduced considerably as compared with that in the conventional method.

Therefore, according to the present invention, without introducing a large amount of CO shift conversion catalyst, the CO conversion rate can be largely improved. Thus, for example, with the CO shift conversion process on a reformed gas by using the method of the present invention, a hydrogen gas suitable as a fuel for a fuel cell, in which the concentration of CO contained is conspicuously lowered, can be produced.

### BRIEF DESCRIPTION OF THE DRAWINGS

Fig. 1 is a conceptual diagram schematically illustrating the configuration of a shift conversion device (not according to the invention).
Fig. 2 is a conceptual diagram illustrating the configuration of an experiment device for testing the present invention.
Fig. 3 is a diagram illustrating a list of compositions of gases to be processed for use in the experiment device of Fig. 2.
Figs. 4A and 4B are graphs illustrating comparison of CO conversion rates of gas #1 and gas #2.
Figs. 5A and 5B are graphs illustrating comparison of CO conversion rates of gas #3 and gas #4.
Figs. 6A and 6B are graphs illustrating comparison of CO conversion rates of gas #5 and gas #6.
Figs. 7A and 7B are graphs illustrating comparison of CO conversion rates of gases #1, #7, and #8.
Figs. 8A and 8B are graphs illustrating comparison of CO conversion rates of gas #1 and gas #3.
Figs. 9A and 9B are graphs illustrating comparison of CO conversion rates of gases #5, #9, and #10.
Fig. 10 is a conceptual diagram of a CO shift conversion device of the present invention.
Fig. 11 is a conceptual diagram illustrating another configuration of the CO shift conversion device of the present invention.
Fig. 12 is a conceptual diagram illustrating another configuration of the CO shift conversion device of the present invention.

### DESCRIPTION OF EMBODIMENTS

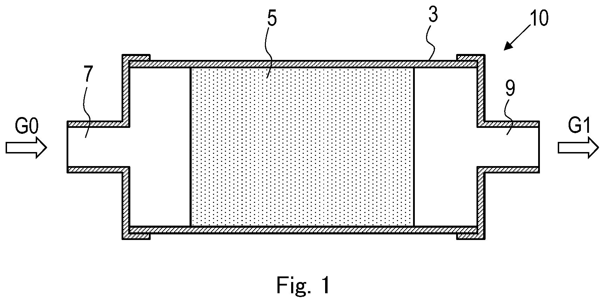

Fig. 1 schematically illustrates the configuration of a CO shift converter. A CO shift converter 10 has a catalyst layer 5 charged with a predetermined CO shift conversion catalyst in a cylindrical reaction tube 3. When a gas (gas to be processed) G0 as an object to be subjected to a shift conversion process is supplied from an inlet 7 of the reaction tube 3 to the shift converter 10, the gas G0 is led into the catalyst layer 5 and a shift conversion reaction occurs while the gas G0 passes through the catalyst layer 5. A gas (processed gas) G1 after the shift conversion reaction is taken from an outlet 9 of the reaction tube 3.

As described above in BACKGROUND ART, to decrease the CO concentration in a reformed gas in order to obtain hydrogen gas as a fuel for a fuel cell, conventionally, the reformed gas as the gas G0 to be processed is supplied to the CO shift converter 10, and the processed gas G1 whose concentration of contained CO is decreased to thousands ppm to about 1% is taken from the outlet 9 of the reaction tube 3. Subsequently, the gas G1 is supplied to a selective oxidation device (not illustrated) to be subjected to a selective oxidation reaction. The gas taken from the selection oxidation device has extremely low concentration of CO contained (about 10 ppm or less), so that it can be used as a fuel gas for a fuel cell.

As described above, to improve the hydrogen production efficiency, it is requested to sufficiently reduce the concentration of CO contained in the gas in the upstream of the selective oxidation device, that is, in the CO shift converter 10.

One of methods for sufficiently decreasing the concentration of CO contained in the gas in the CO shift converter 10 is a method of simply increasing the amount of a shift conversion catalyst composing the catalyst layer 5. In this case, the size of the reaction tube 3 itself becomes large.

By earnest studies, the inventors of the present invention have found that CO₂ contained in the mixed gas decreases the efficiency of the shift conversion reaction. The inventors also have found that since the degree of decrease of the efficiency varies when the kinds of shift conversion catalysts used as the catalyst layer 5 are changed, the shift conversion catalysts are poisoned by CO₂ and, as a result, the efficiency of the shift conversion reaction decreases. In the following, the details will be described with reference to experiment results.

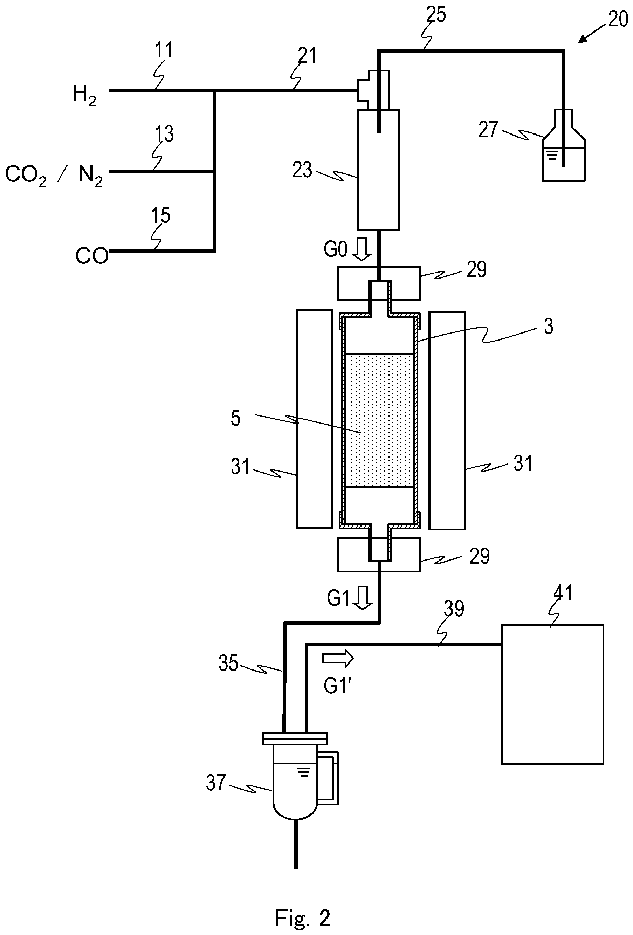

Fig. 2 schematically illustrates the configuration of an experiment device used for experiments by the inventors of the present invention. An experiment device 20 has gas supply pipes 11, 13, and 15. Gases flowing in from the pipes are mixed in a mixing pipe 21 and, after that, supplied to the inlet of a steam generator 23. At some midpoints in each of the pipes 11, 13, and 15, a stop valve, a pressure reducing valve, an electromagnetic valve, a mass flow controller, a check valve, a pressure gauge, and the like which are communicated with a gas source are provided as necessary (not illustrated).

To the inlet of the steam generator 23, purified water is injected from a water tank 27 via a water supply pipe 25. At some midpoints in the pipe 25, a pump, a check valve, a resistor, and the like are provided as necessary.

The purified water injected to the steam generator 23 is vaporized at a temperature of about 200°C, thereby becoming water vapor (H₂O gas). Therefore, by passing the H₂ gas from the pipe 11, the CO₂ gas from the pipe 13, and CO gas from the pipe 15, a mixed gas of H₂, CO, CO₂, and H₂O is generated in the steam generator 23, and the mixed gas is led to the reaction tube 3. The mixture gas is a gas to be subjected to shift conversion process and corresponds to the gas G0 to be processed illustrated in Fig. 1.

At the time of causing a shift conversion reaction by using the experiment device 20, first, only the water vapor (H₂O) is introduced from the steam generator 23 into the reaction tube 3. After the water vapor sufficiently reaches the catalyst layer 5, supply of the mixture gas of H₂, CO, and CO₂ is started.

During the gas G0 to be processed passing through the catalyst layer 5, a shift conversion reaction occurs, and the gas G0 to be processed is converted to the processed gas G1. When the processed gas G1 flows out from the outlet of the reaction tube 3 via an exhaust pipe 35, the processed gas G1 passes through a drain tank (cooler) 37 in which purified water is contained, and is cooled to remove moisture. A processed gas G1' from which the moisture is removed is supplied to a gas chromatography analysis device 41 via an exhaust pipe 39. At some midpoints in the pipe 39, a pressure gauge, a back pressure valve, a three-way electromagnetic valve, and the like are provided as necessary (not illustrated).

The reaction tube 3 is housed in an annular-shaped electric furnace 31 and each of an inlet and an outlet is covered with a mantle heater 29. The catalyst layer 5 is provided in the central part in the reaction tube 3, and front and rear sides of the catalyst layer 5 are filled with glass wool so that the catalyst layer 5 is fixed and is not be moved. In the reaction tube 3, a sheath pipe is inserted from the outlet to a position close to the outlet-side end of the catalyst layer 5, and a thermocouple is inserted in the sheath pipe (not illustrated). With such a configuration, the reaction temperature in the reaction tube 3 is measured by the thermocouple, and the heating state of the electric furnace 31 and the mantle heater 29 is adjusted based on the measured temperature, so that the reaction temperature in the reaction tube 3 can be controlled to a predetermined range.

In the experiment device 20, the tube body part, plugs of the inlet and outlet, a reducer part, and the like of the reaction tube 3 are made of a metal such as stainless steel. The structure, size, material, and the like of the reaction tube 3 may be appropriately determined depending on the treatment amount of the CO shift conversion reaction and the like.

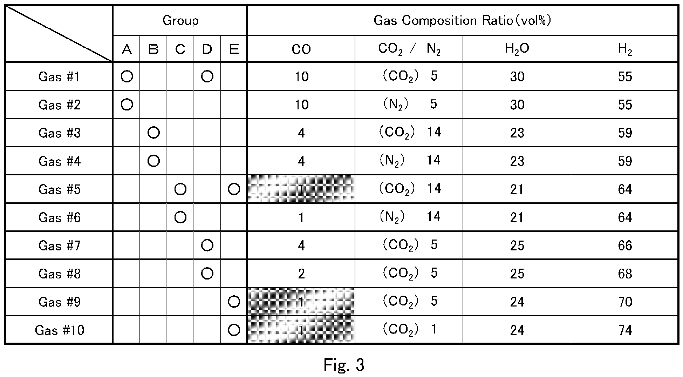

Next, the gas composition of the gas G0 to be processed used for experiments will be described. In the experiment, ten kinds of gases G0 to be processed #1 to #10 shown in the gas composition table of Fig. 3 were prepared and properly used according to experiments. The mixture ratio of the component gases of each of the ten kinds of the gases G0 to be processed is adjusted by controlling the supply amount of each of the component gases from the pipes 11, 13, and 15 and the supply amount of the purified water (H₂O) to the steam generator 23.

The ten kinds of the gases G0 to be processed are classified to groups A to E having certain common rules on the composition ratios. In the following experiment, comparison and examination are carried out on the basis of data obtained by using the gases to be processed belonging to the same group.

Gases #1 and #2 belong to group A.
Gases #3 and #4 belong to group B.
Gases #5 and #6 belong to group C.
Gases #1, #7, and #8 belong to group D.
Gases #5, #9, and #10 belong to group E.

The mixing ratio of CO, CO₂, H₂O, and H₂ of the gas #1 is 10 : 5 : 30 : 55. The gas #2 has a composition obtained by replacing CO₂ of the gas #1 with N₂ without changing the mixing ratio and the mixing ratio of CO, N₂, H₂O, and H₂ of the gas #2 is 10 : 5 : 30 : 55.

The mixing ratio of CO, CO₂, H₂O, and H₂ of the gas #3 is 4 : 14 : 23 : 59. The gas #4 has a composition obtained by replacing CO₂ of the gas #3 with N₂ without changing the mixing ratio and the mixing ratio of CO, N₂, H₂O, and H₂ of the gas #4 is 4 : 14 : 23 : 59.

The mixing ratio of CO, CO₂, H₂O, and H₂ of the gas #5 is 1 : 14 : 21 : 64. The gas #6 has a composition obtained by replacing CO₂ of the gas #5 with N₂ without changing the mixing ratio and the mixing ratio of CO, N₂, H₂O, and H₂ of the gas #6 is 1 : 14 : 21 : 64.

By comparing results of experiments performed by using the gases #1 and #2 belonging to the group A, examination regarding the influence on a shift conversion reaction given by the presence/absence of CO₂ in the gas G0 to be processed can be performed. Further, with comparison between the gases #3 and #4 belonging to the group B and comparison between the gases #5 and #6 belonging to the group C, more rigorous examination can be performed.

The effect of preparing the gas obtained by replacing CO₂ with N₂ of the same volume ratio, not simply removing CO₂ from the gas G0 to be processed in each of the groups A, B, and C, is to eliminate the influence on the shift conversion reaction of the change in the ratio of the other gases (CO, H₂O, and H₂) in the gas G0 to be processed. As a gas for comparison, N₂ which is a stable gas and can be obtained at a low cost was used.

The mixing ratio of CO, CO₂, H₂O, and H₂ of the gas #7 is 4 : 5 : 25 : 66. The mixing ratio of CO, CO₂, H₂O, and H₂ of the gas #8 is 2 : 5 : 25 : 68. Those gases correspond to gases each obtained by varying the concentration of CO from the gas #1 while keeping the concentration of CO₂ to the same as the gas #1 (5%).

That is, by comparing results of the experiments performed by using the gases #1, #7, and #8 belonging to the group D, examination regarding the influence on a shift conversion reaction given by the concentration of CO existing in the gas G0 to be processed can be performed.

The mixing ratio of CO, CO₂, H₂O, and H₂ of the gas #9 is 1 : 5 : 24 : 70. The mixing ratio of CO, CO₂, H₂O, and H₂ of the gas #10 is 1 : 1 : 24 : 74. Those gases correspond to gases each obtained by varying the concentration of CO₂ from the gas #5 while keeping the concentration of CO to the same as the gas #5 (1%).

That is, by comparing results of experiments performed using the gases #5, #9, and #10 belonging to the group E, examination regarding the influence on a shift conversion reaction given by the concentration of CO₂ existing in the gas G0 to be processed can be performed.

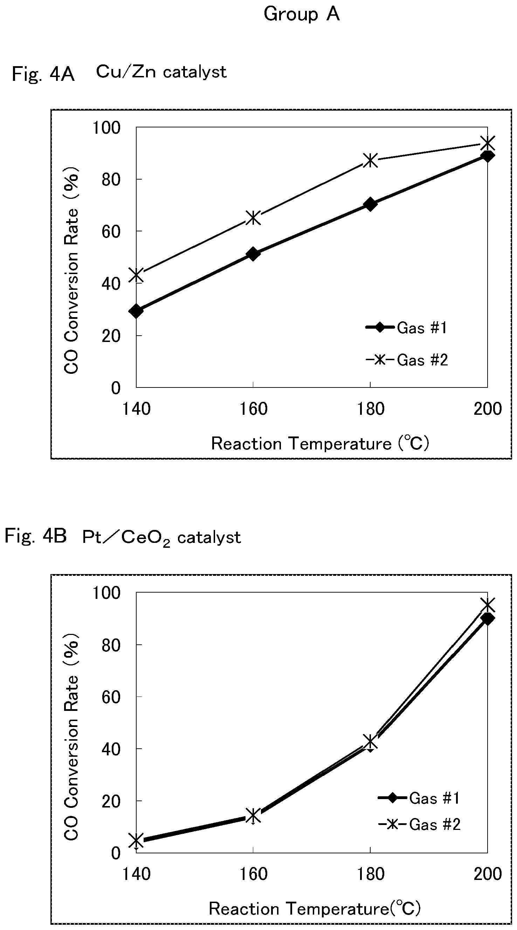

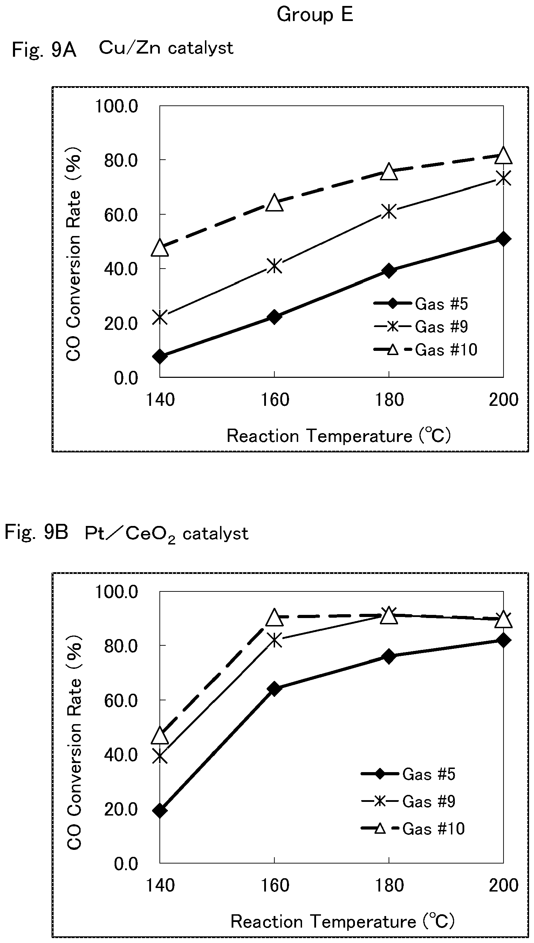

In the experiment, by changing the two kinds of catalysts used for the catalyst layer 5 for the ten kinds of the gases G0 to be processed (#1 to #10), the characteristics of the CO conversion rates in respective states were examined. As CO shift conversion catalysts, two kinds of catalysts were used for the examination; a commercially-available copper-zinc-based catalyst (Cu/Zn catalyst) which is prepared by a general preparation method (coprecipitation method) and whose composition is made of copper oxide, zinc oxide, and alumina (carrier), and a Pt/CeO₂ catalyst (platinum-based catalyst) obtained by preparing a nitric acid solution having a predetermined concentration of dinitrodianmine platinum crystal (Pt(NO₂)₂(NHa)₂), carrying it on cerium oxide (CeO₂), drying the resultant, and reducing it in hydrogen stream. The two catalysts each having a granular shape with 0.85 to 1 mm in a grain diameter and subjected to an H₂ reducing process for one hour at 200°C were used. Figs. 4A and 4B to Figs. 9A and 9B illustrate results of the experiment.

Figs. 4A and 4B are graphs illustrating, by the catalysts used for the catalyst layer 5, the relationship between the temperature (reaction temperature) in the reaction tube 3 and the ratio of CO converted (CO conversion rate) in the case of using the gases #1 and #2 in the group A as the gases G0 to be processed. Fig. 4A is a graph illustrating the case where the Cu/Zn catalyst is used as the catalyst layer 5, and Fig. 4B is a graph illustrating the case where the Pt/CeO₂ catalyst is used as the catalyst layer 5.

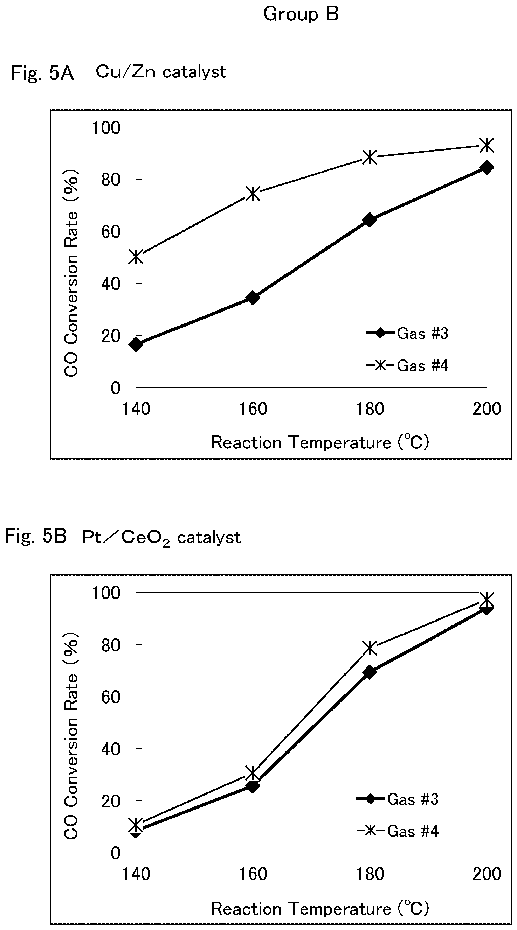

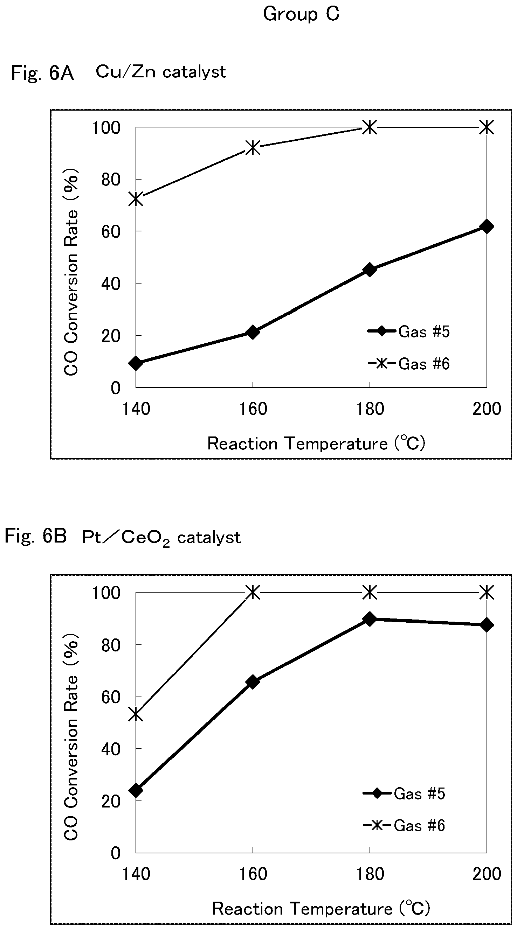

Similarly, Figs. 5A and 5B are graphs illustrating, by the catalysts, the relationship between the reaction temperature and the CO conversion rate in the case of using the gases #3 and #4 in the group B as the gases G0 to be processed. Figs. 6A and 6B are graphs illustrating, by the catalysts, the relation of the reaction temperature and the CO conversion rate in the case of using the gases #5 and #6 in the group C as the gases G0 to be processed.

It is understood from Figs. 4A and 4B to Figs. 6A and 6B that the CO conversion rate of the gas (#2, #4, and #6) obtained by replacing CO₂ with N₂ in each of the groups is higher. It is also understood that the difference of the CO conversion rate appears conspicuously when the Cu/Zn catalyst is used as compared with the case of using the Pt/CeO₂ catalyst.

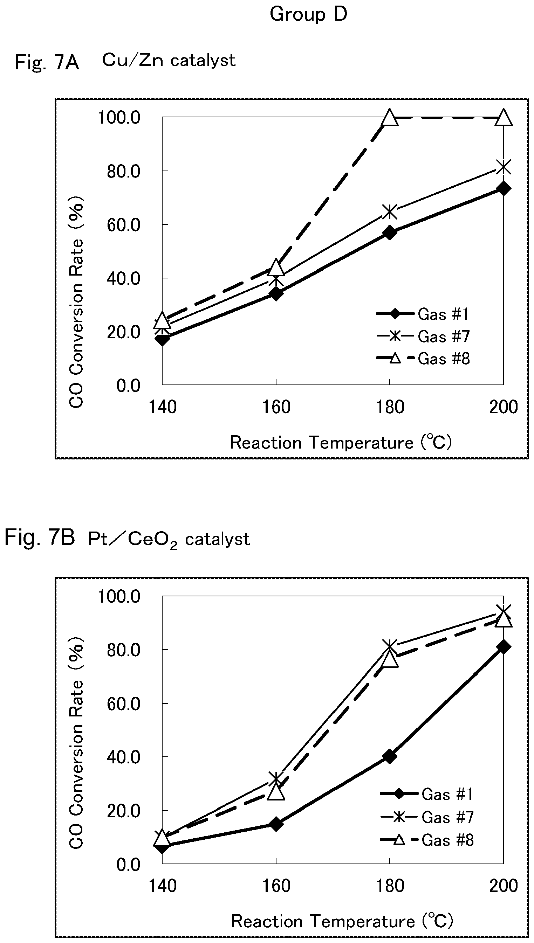

Figs. 7A and 7B are graphs illustrating, by the catalysts used for the catalyst layer 5, the relationship between the temperature (reaction temperature) in the reaction tube 3 and the ratio of CO converted (CO conversion rate), in the case of using the gases #1, #7, and #8 in the group D as the gases G0 to be processed. Like Figs. 4A and 4B to Figs. 6A and 6B, Fig. 7A is a graph illustrating the case where the Cu/Zn catalyst is used as the catalyst layer 5, and Fig. 7B is a graph illustrating the case where the Pt/CeO₂ catalyst is used as the catalyst layer 5.

As illustrated in Fig. 3, in the group D, the concentration of CO₂ is fixed and the CO concentration is varied to 10% (gas #1), 4% (gas #7), and 2% (gas #8). In the case of using the Cu/Zn catalyst as illustrated in Fig. 7A, the tendency that the decrease of the CO conversion rate appears conspicuously as the CO concentration becomes high. Also in the case of using the Pt/CeO₂ catalyst as illustrated in Fig. 7B, the CO conversion rate in the case of using the gas #1 whose CO concentration is 10% is largely lower than that in the case of using the gas #7 whose CO concentration is 4% and that in the case of using the gas #8 whose CO concentration is 2%.

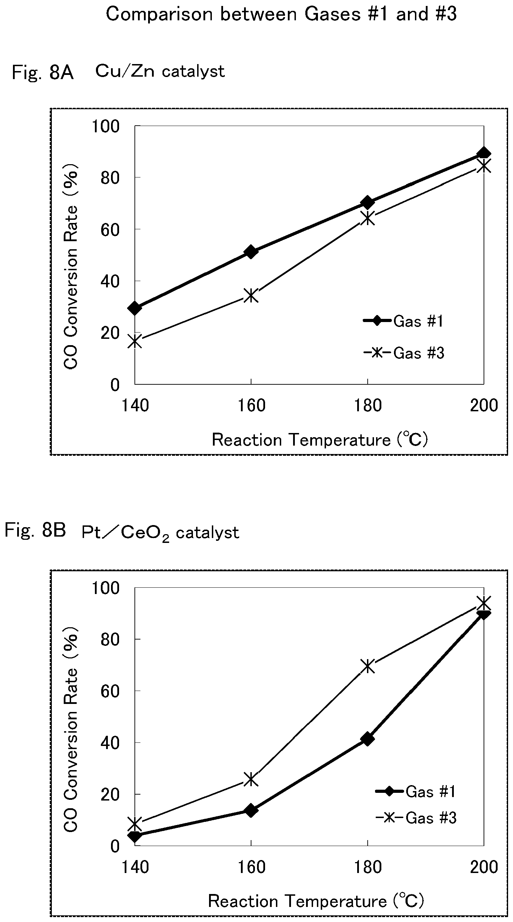

To examine the effect of fixing the CO₂ concentration, Figs. 8A and 8B illustrate graphs comparing CO conversion rates in the cases of using the gases #1 and #3 having different CO₂ concentration and different CO concentration. The gas #3 has lower CO concentration and higher CO₂ concentration as compared with the gas #1. Fig. 8A illustrates that, in the case of using the Cu/Zn catalyst, the CO conversion rate of the gas #1 having higher CO concentration is higher than that of the gas #3 having lower CO concentration, which is different from the graph of Fig. 7A.

It is determined that the difference between the data indicated by the graph of Fig. 7A and that indicated by the graph of Fig. 8A comes from the point whether the CO₂ concentration is fixed or not. Although the CO concentration of the gas #3 is lower than that of the gas #1, the CO₂ concentration of the gas #3 is higher than that of the gas #1. It is, therefore determined that, in the case of using the gas #3, since the concentration of CO₂ contained is higher as compared with the case of using the gas #1, the CO conversion rate decreases, the degree of decrease is higher than the increase amount of the CO conversion rate because of the low concentration of CO contained and, as a result, the CO conversion rate decreases.

In the case of using the Pt/CeO₂ catalyst, as illustrated in Fig. 8B, the CO conversion rate of the gas #1 still having higher CO concentration is lower than that of the gas #3 having lower CO concentration also in the case where the CO₂ concentration is varied.

That is, it is determined that, in the case of using the Pt/CeO₂ catalyst, although the CO conversion rate of the gas #3 is lower because the concentration of contained CO₂ is higher than that of the gas #1, the degree of decrease is below the increase amount of the CO conversion rate because of the low concentration of CO contained. That is, it is determined that the influence of the low CO concentration on the CO conversion rate is strong and, as a result, like the case of Fig. 7B in which the CO₂ concentration is fixed, the CO conversion rate of the gas #3 whose contained CO concentration is lower is higher than that of the gas #1.

That is, the graphs of Figs. 7A and 7B and Figs. 8A and 8B suggest that the Cu/Zn catalyst is more sensitive to a change in the CO₂ concentration than the Pt/CeO₂ catalyst. When the example is regarded that the presence/absence of CO₂ causes conspicuous change in the concentration of contained CO₂, the above description matches the description made with reference to the graphs of Figs. 4A and 4B to Figs. 6A and 6B.

Figs. 9A and 9B are graphs illustrating, by the catalysts used for the catalyst layer 5, the relationship between the temperature (reaction temperature) in the reaction tube 3 and the ratio of CO converted (CO conversion rate), in the case of using the gases #5, #9, and #10 in the group E as the gases G0 to be processed. The method of forming the graphs is similar to that of Figs. 4A and 4B to Figs. 8A and 8B.

As illustrated in Fig. 3, in the group E, the concentration of CO is fixed and the CO₂ concentration is varied to 14% (gas #5), 5% (gas #9), and 1% (gas #10). It is understood from both Figs. 9A and 9B that the tendency that the decrease of the CO conversion rate appears conspicuously as the CO₂ concentration becomes high. More specifically, the behavior of the change in Fig. 9A is larger than that in Fig. 9B.

In the graphs of Figs. 9A and 9B, when the changes in the value of the CO conversion rate under the same reaction temperature is watched in the order of the gas #10, the gas #9, and the gas #5, transition of the changes in the CO conversion rate in the case of changing the concentration of CO₂ contained in the gas to be processed to 1%, 5%, and 14% can be obtained.

In the case of the Cu/Zn catalyst illustrated in Fig. 9A, only by changing the CO₂ concentration from 1% to 5%, large decrease in the CO conversion rate can be seen. On the other hand, in the case of the Pt/CeO₂ catalyst illustrated in Fig. 9B, when the CO₂ concentration is changed from 1% to 5%, although the CO conversion rate decreases, it is understood that the degree of decrease is very small.

It is understood from Figs. 9A and 9b, when the CO₂ concentration is changed from 1% to 14%, the CO conversion rate decreases conspicuously in the case of the Cu/Zn catalyst. Also in the case of the Pt/CeO₂ catalyst, when the CO₂ concentration is changed from 1% to 14%, the CO conversion rate decreases more largely than when the CO₂ concentration is changed from 1% to 5%. However, the degree of the change in the case of the Pt/CeO₂ catalyst is smaller than that in the case of the Cu/Zn catalyst.

Therefore, Figs. 9A and 9B also suggest that the Cu/Zn catalyst is more sensitive to a change in the CO₂ concentration than the Pt/CeO₂ catalyst.

It is understood from the graphs of the above-described drawings that the higher the concentration of CO₂ contained in the gas G0 to be processed is, the more the influence that the CO conversion rate decreases occurs. It suggests that the catalyst used for the catalyst layer 5 is poisoned by CO₂ in the gas to be processed and, as a result, the CO conversion rate decreases. In the case of setting the concentration of CO₂ contained in the gas G0 to be processed to the same, the CO conversion rate of the Cu/Zn catalyst decreases more than that of the Pt/CeO₂ catalyst. It is consequently understood that there is also a difference in the magnitude of the influence of poisoning by CO₂ in accordance with the kinds of the catalysts.

From the above-described experiment results, it is understood that by decreasing the concentration of the CO₂ gas contained in the gas G0 to be processed as a shift conversion target, the CO conversion rate can be improved, and a hydrogen gas having low concentration of contained CO can be generated.

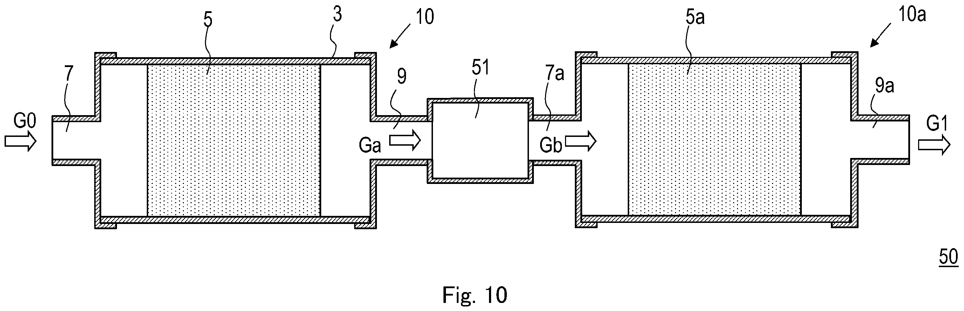

Fig. 10 illustrates schematic configuration of a CO shift conversion device of the present invention. A CO shift conversion device 50 has CO shift converters (CO shift conversion units) 10 and 10a and a CO₂ remover (CO₂ removing unit) 51.

From the inlet 7 of the CO shift converter 10, the gas G0 to be processed as a shift conversion target is supplied. As described above, when it is assumed to use the present invention at the time of generating hydrogen gas as a fuel for a fuel cell from a reformed gas, the gas G0 to be processed corresponds to the reformed gas and usually contains CO, CO₂, H₂, and H₂O.

The gas G0 to be processed causes a shift conversion reaction represented by Chemical Formula 1 while it passes through the catalyst layer 5. In a gas Ga which completely passed through the catalyst layer 5, the contained CO concentration decreases and the CO₂ concentration increases as compared with G0. The gas Ga in which the CO₂ concentration increases is introduced to the CO₂ remover 51 via a pipe.

In the CO shift conversion device 50, a membrane absorption method is used for separating CO₂ from a mixed gas by using the difference in permeation speeds of gases by a membrane as the CO₂ remover 51. The applicants of the present invention also developed a membrane technique of selectively passing CO₂ from a mixed gas containing H₂ (refer to, for example, JP 2008-036463 A and WO 2009/093666).

Each of the membranes disclosed in the documents has high CO₂/H₂ selectivity under conditions of high temperature of 100°C or higher and high pressure of about 100 to 500 kPa. Therefore, by using the membrane as the CO₂ remover 51 and supplying the mixed gas Ga obtained from the CO shift converter 10 to the membrane, the concentration of CO₂ contained in mixed gas Gb obtained from the CO₂ remover 51 can be largely decreased.

Obviously, the membrane used as the CO₂ remover 51 is not limited to the membranes disclosed in the documents. Another membrane can be also used if it can realize high CO₂/H₂ selectivity under mounting conditions. The applicants of the present invention are developing other membranes of different materials and different structures, and some of the membranes have been already developed.

A gas Gb released from the CO₂ remover 51 is transmitted into the CO shift converter 10a on the downstream side via a pipe. The CO shift converter 10a causes a shift conversion reaction using the gas Gb as a gas to be processed. Specifically, in a manner similar to the case of the gas G0 to be processed, the shift conversion reaction represented by Chemical Formula 1 occurs while the gas Gb to be processed passes through the catalyst layer 5a. The concentration of CO contained in a gas G1 which completely passed through the catalyst layer 5a and released from an outlet 9a further decreases as compared with that in the gas Gb.

As described above, the CO shift conversion catalysts used for the catalyst layers 5 and 5a are poisoned by CO₂ in the passing gas. Since the CO₂ concentration in the gas rises toward the downstream side by the shift conversion reaction, the CO conversion rate decreases while the gas passes through the same catalyst layer. Specifically, in the CO shift converter 10, the CO conversion rate decreases toward the downstream (the outlet 9 side).

In the CO shift conversion device 50, after the contained CO₂ is removed by the CO₂ remover 51 to decrease the contained CO₂ concentration, the gas to be processed is introduced into the CO shift converter 10a. Consequently, when the gas passes through the catalyst layer 5a in a position close to the inlet 7a of the CO shift converter 10a on the downstream side, the poisoning action is considerably lowered as compared with the case that the gas passes through the catalyst layer 5 in a position close to the outlet 9 of the CO shift converter 10 on the upstream side, and thus the CO conversion rate improves. Therefore, also in the CO shift converter 10a on the downstream side, the contained CO concentration can be lowered. As a result, the concentration of CO contained in the processed gas G1 obtained by the CO shift conversion device 50 can be made conspicuously lower than that of CO contained in the gas Ga.

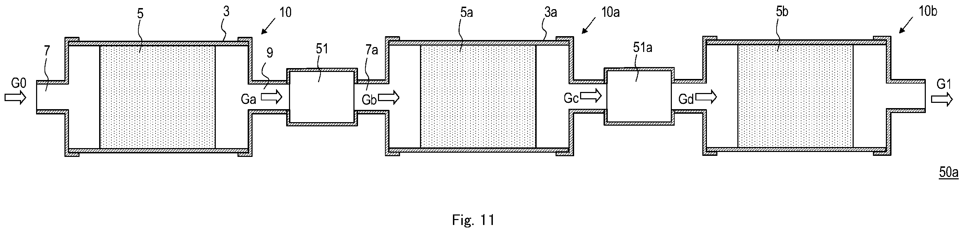

Although the CO shift conversion device 50 illustrated in Fig. 10 has the configuration that the CO shift converters are provided in two stages and the CO₂ remover 51 is provided between them, it is also possible to provide CO shift converters in a plurality of stages which are three or more stages and provide a CO₂ remover between the respective shift converters. Fig. 11 illustrates the case of a three-stage configuration. In a CO shift conversion device 50a illustrated in Fig. 11, 51a indicates a CO₂ remover, 10b indicates a CO shift converter, and 5b indicates a catalyst layer.

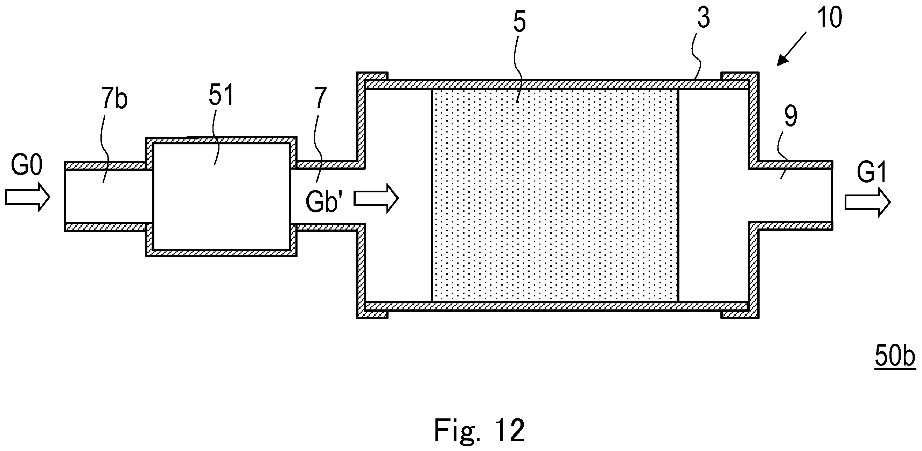

The effects of the present invention can be realized also by a configuration in which a CO shift converter has a one-stage configuration and a CO₂ remover is provided on the upstream of the CO shift converter (Fig. 12). In the case of assuming a reformed gas as a gas to be subjected to the converting process, since CO₂ is mixed inevitably, the concentration of the contained CO₂ is preliminarily lowered by removing CO₂ in the CO₂ remover 51 before the gas to be processed is introduced into the CO shift converter 10 (gas Gb'), which can improve the CO conversion rate as compared with the case of Fig. 1. In Fig. 12, 7b indicates the inlet of the CO₂ remover 51.

Obviously, also in the configurations of Figs. 10 and 11, it is also possible to mount a CO₂ remover on the upstream side of introducing the gas G0 to be processed to the CO shift converter 5 to remove CO₂ in advance.

With the configuration as described above, the CO conversion rate can be further improved than the general shift converter illustrated in Fig. 1.

Hereinafter, other embodiments will be described.
<2> Although the CO shift device in which processors (CO shift converter and CO₂ remover) are connected via a pipe is assumed in the configurations illustrated in Figs. 10 to 12, an integrated device in which an area for performing CO shift conversion process and an area for performing CO₂ removing process may be continuously configured in series in a single casing may be configured.
<3> Although the gas to be processed which is introduced to the inlet of the CO shift conversion device is a reformed gas in the above description, obviously, the invention is not limited to the reformed gas as long as the gas is a mixed gas containing CO₂ and CO.

### EXPLANATION OF REFERENCES

- 3: reaction tube
- 5, 5a, 5b: catalyst layer
- 7, 7a, 7b: inlet
- 9, 9a: outlet
- 10, 10a, 10b: CO shift converter
- 11: gas supply pipe
- 13: gas supply pipe
- 15: gas supply pipe
- 20: experiment device
- 21: mixing pipe
- 23: steam generator
- 25: water supply pipe
- 27: water tank
- 29: mantle heater
- 31: electric furnace
- 35: exhaust pipe
- 37: drain tank (cooler)
- 39: exhaust pipe
- 41: gas chromatography analysis device
- 50, 50a, 50b: CO shift conversion device of the present invention
- 51, 51a: CO₂ remover
- G0: gas (gas to be processed)
- G1,: G1' gases (processed gases)

## Claims

1. A CO shift conversion device in which CO and H₂O contained in a gas to be processed are reacted and thereby converted into CO₂ and H₂, the device comprising:
a CO shift conversion unit having a catalyst layer composed of a CO shift catalyst and performing a CO shift conversion process on a gas flowing inside; and
a CO₂ removing unit removing CO₂ contained in a gas introduced and transmitting a processed gas whose CO₂ concentration is lower than that of the introduced gas to a downstream side, the CO₂ removing unit being formed of a membrane which selectively passes CO₂, wherein
the catalyst layer is composed of a CO shift conversion catalyst having a property that a CO conversion rate decreases with an increase of the concentration of CO₂ contained in the gas flowing inside due to a CO₂ poisoning action and the CO shift conversion catalyst includes a copper-zinc-based catalyst, and
the device is configured so that the gas to be processed is supplied to the CO shift conversion unit after the concentration of CO₂ contained in the gas to be processed is lowered by the CO₂ removing unit.

2. The CO shift conversion device according to claim 1, wherein
the CO shift conversion unit is provided in a plurality of stages, and
the device is configured so that the gas to be processed is subjected to the CO shift conversion process in the CO shift conversion unit on an upstream side, and subsequently introduced to the CO₂ removing unit where the concentration of contained CO₂ is lowered, and subsequently supplied to the CO shift conversion device on the downstream side.

3. A CO shift conversion method in which CO and H₂O contained in a gas to be processed are reacted and thereby converted into CO₂ and H₂, the method comprising the steps of:
lowering a concentration of CO₂ contained in the gas to be processed by removing the CO₂ from the gas to be processed using a membrane which selectively passes CO₂; and
subsequently performing a CO shift conversion process on the gas by allowing the gas to pass through a catalyst layer composed of a CO shift conversion catalyst, wherein
the catalyst layer has a property that a CO conversion rate decreases with an increase of the concentration of CO₂ contained in the gas flowing inside due to a CO₂ poisoning action and the CO shift conversion catalyst composing the catalyst layer includes a copper-zinc-based catalyst.

4. The CO shift conversion method according to claim 3, wherein the catalyst layer is divided in a plurality of stages, and the method comprises the steps of:
performing a CO shift conversion process on the gas to be processed by allowing the gas to pass through the catalyst layer on an upstream side of two successive stages in the plurality of stages;
subsequently lowering the concentration of contained CO₂; and
subsequently performing a CO shift conversion process on the gas to be processed by allowing the gas to pass through the catalyst layer on a downstream side of the two successive stages.

## Patentansprüche

1. CO-Shift-Konvertierungsvorrichtung, in der CO und H₂O, die in einem zu verarbeitenden Gas enthalten sind, reagieren und dadurch in CO₂ und H₂ umgewandelt werden, wobei die Vorrichtung Folgendes umfasst:
eine CO-Shift-Konvertierungseinheit, die eine Katalysatorschicht aufweist, die aus einem CO-Shift-Katalysator besteht, und einen CO-Shift-Konvertierungsprozess mit einem Gas, das innen fließt, ausführt; und
eine CO₂-Entfernungseinheit, die CO₂, das in einem eingeführten Gas enthalten ist, entfernt und ein verarbeitetes Gas, dessen CO₂-Konzentration niedriger ist als die des eingeführten Gases, zu einer nachgelagerten Seite weiterleitet, wobei die CO₂-Entfernungseinheit aus einer Membran ausgebildet ist, die selektiv CO₂ durchlässt, wobei
die Katalysatorschicht aus einem CO-Shift-Konvertierungskatalysator besteht, der eine Eigenschaft aufweist, dass eine CO-Konvertierungsrate mit einer Zunahme der Konzentration von CO₂, das in dem innen fließenden Gas enthalten ist, aufgrund einer CO₂-Vergiftungswirkung abnimmt, und der CO-Shift-Konvertierungskatalysator einen Kupfer-Zink-basierten Katalysator einschließt, und
die Vorrichtung derart konfiguriert ist, dass das zu verarbeitende Gas zu der CO-Shift-Konvertierungseinheit zugeführt wird, nachdem die Konzentration von CO₂, das in dem zu verarbeitenden Gas enthalten ist, durch die CO₂-Entfernungseinheit verringert wird.

2. CO-Shift-Konvertierungsvorrichtung nach Anspruch 1, wobei
die CO-Shift-Konvertierungseinheit in einer Vielzahl von Stufen bereitgestellt ist und
die Vorrichtung derart konfiguriert ist, dass das zu verarbeitende Gas dem CO-Shift-Konvertierungsprozess in der CO-Shift-Konvertierungseinheit an einer vorgelagerten Seite unterzogen wird und anschließend in die CO₂-Entfernungseinheit eingeführt wird, wo die Konzentration von enthaltenem CO₂ verringert wird, und anschließend zu der CO-Shift-Konvertierungsvorrichtung an der nachgelagerten Seite zugeführt wird.

3. CO-Shift-Konvertierungsverfahren, in dem CO und H₂O, die in einem zu verarbeitenden Gas enthalten sind, reagieren und dadurch in CO₂ und H₂ umgewandelt werden, wobei das Verfahren die folgenden Schritte umfasst:
Verringern einer Konzentration von CO₂, das in dem zu verarbeitenden Gas enthalten ist, durch Entfernen des CO₂ aus dem zu verarbeitenden Gas unter Verwendung einer Membran, die selektiv CO₂ durchlässt; und
anschließendes Ausführen eines CO-Shift-Konvertierungsprozesses mit dem Gas durch Ermöglichen, dass das Gas durch eine Katalysatorschicht, die aus einem CO-Shift-Konvertierungskatalysator besteht, durchgeht, wobei
die Katalysatorschicht eine Eigenschaft aufweist, dass eine CO-Konvertierungsrate mit einer Zunahme der Konzentration von CO₂, das in dem innen fließenden Gas enthalten ist, aufgrund einer CO₂-Vergiftungswirkung abnimmt, und der CO-Shift-Konvertierungskatalysator, der die Katalysatorschicht bildet, einen Kupfer-Zink-basierten Katalysator einschließt.

4. CO-Shift-Konvertierungsverfahren nach Anspruch 3, wobei
die Katalysatorschicht in eine Vielzahl von Stufen unterteilt ist und das Verfahren die folgenden Schritte umfasst:
Ausführen eines CO-Shift-Konvertierungsprozesses mit dem zu verarbeitenden Gas durch Ermöglichen, dass das Gas durch die Katalysatorschicht an einer vorgelagerten Seite von zwei aufeinanderfolgenden Stufen in der Vielzahl von Stufen durchgeht;
anschließendes Verringern der Konzentration von enthaltenem CO₂; und
anschließendes Ausführen eines CO-Shift-Konvertierungsprozesses mit dem zu verarbeitenden Gas durch Ermöglichen, dass das Gas durch die Katalysatorschicht an einer nachgelagerten Seite der zwei aufeinanderfolgenden Stufen durchgeht.

## Revendications

1. Dispositif de conversion catalytique de CO dans lequel le CO et l'H₂O contenus dans un gaz à traiter sont mis à réagir et ainsi convertis en CO₂ et H₂, le dispositif comprenant :
une unité de conversion catalytique de CO ayant une couche de catalyseur composée d'un catalyseur de conversion de CO et effectuant un processus de conversion catalytique de CO sur un gaz s'écoulant à l'intérieur ; et
une unité d'élimination de CO₂ éliminant le CO₂ contenu dans un gaz introduit et transmettant un gaz traité dont la concentration en CO₂ est inférieure à celle du gaz introduit vers un côté aval, l'unité d'élimination de CO₂ étant formée d'une membrane qui laisse passer sélectivement le CO₂, dans lequel
la couche de catalyseur est composée d'un catalyseur de conversion catalytique de CO ayant une propriété telle qu'un taux de conversion de CO diminue avec une augmentation de la concentration en CO₂ contenu dans le gaz s'écoulant à l'intérieur en raison d'une action d'empoisonnement par CO₂ et le catalyseur de conversion catalytique de CO inclut un catalyseur à base de cuivre et de zinc, et
le dispositif est configuré de sorte que le gaz à traiter est amené dans l'unité de conversion catalytique de CO après que la concentration en CO₂ contenue dans le gaz à traiter a été abaissée par l'unité d'élimination de CO₂.

2. Dispositif de conversion catalytique de CO selon la revendication 1, dans lequel
l'unité de conversion catalytique de CO est fournie en une pluralité d'étages, et
le dispositif est configuré de sorte que le gaz à traiter est soumis au processus de conversion catalytique de CO dans l'unité de conversion catalytique de CO sur un côté amont, puis introduit dans l'unité d'élimination de CO₂ où la concentration en CO₂ contenu est abaissée, puis amené dans le dispositif de conversion catalytique de CO sur le côté aval.

3. Procédé de conversion catalytique de CO dans lequel le CO et l'H₂O contenus dans un gaz à traiter sont mis à réagir et ainsi convertis en CO₂ et H₂, le procédé comprenant les étapes consistant à :
abaisser une concentration en CO₂ contenu dans le gaz à traiter en éliminant le CO₂ du gaz à traiter à l'aide d'une membrane qui laisse passer sélectivement le CO₂ ; et
effectuer ultérieurement un processus de conversion catalytique de CO sur le gaz en laissant passer le gaz à travers une couche de catalyseur composée d'un catalyseur de conversion catalytique de CO, dans lequel
la couche de catalyseur a une propriété telle qu'un taux de conversion de CO diminue avec une augmentation de la concentration en CO₂ contenu dans le gaz s'écoulant à l'intérieur en raison d'une action d'empoisonnement par CO₂ et le catalyseur de conversion catalytique de CO composant la couche de catalyseur inclut un catalyseur à base de cuivre et de zinc.

4. Procédé de conversion catalytique de CO selon la revendication 3, dans lequel
la couche de catalyseur est divisée en une pluralité d'étages, et le procédé comprend les étapes consistant à :
effectuer un processus de conversion catalytique de CO sur le gaz à traiter en laissant passer le gaz à travers la couche de catalyseur sur un côté amont de deux étages successifs dans la pluralité d'étages ;
abaisser ultérieurement la concentration en CO₂ contenu ; et
effectuer ultérieurement un processus de conversion catalytique de CO sur le gaz à traiter en laissant passer le gaz à travers la couche de catalyseur sur un côté aval des deux étages successifs.
